# EUROPEAN PATENT SPECIFICATION

(11) **EP 4 176 330 B1**
(45) Date of publication and mention of the grant of the patent: **21.02.2024**
(21) Application number: 20736324.3
(22) Date of filing: 01.07.2020
(51) Int. Cl.: G06F 1/16, G06F 3/04883, G06F 3/04842, G06F 3/0481

(54) **USER DEVICE FOR DISPLAYING A USER-INTERFACE OBJECT AND METHOD THEREOF**
BENUTZERVORRICHTUNG ZUR ANZEIGE EINES BENUTZERSCHNITTSTELLENOBJEKTS UND VERFAHREN DAFÜR
DISPOSITIF UTILISATEUR POUR AFFICHER UN OBJET D'INTERFACE UTILISATEUR ET SON PROCÉDÉ

(43) Date of publication of application: 10.05.2023
(73) Proprietor: Telefonaktiebolaget LM ERICSSON (PUBL), 16483 Stockholm (SE)
(72) Inventor: ÖKVIST, Peter, 973 41 Luleå (SE); KRISTENSSON, Andreas, 247 35 Södra Sandby (SE); ARNGREN, Tommy, 954 42 Södra Sunderby (SE)
(74) Representative: Ericsson
(86) International application number: PCT/EP2020/068545
(87) International publication number: WO 2022/002389

(56) References cited:
- US-A1- 2011 128 241
- US-A1- 2011 209 100
- US-A1- 2011 291 964
- US-A1- 2016 124 599

## Description

### TECHNICAL FIELD

The present disclosure relates to a user device, a method performed by a user device, and a computer program product.

### BACKGROUND

Modern smartphones are becoming available that have "dual displays", i.e., a first display device that during "normal operations" is facing the user and a second display device that is then facing away from the user. Because only one display device is viewable to a user at a time, it can be difficult for users to manage what information and where information is being displayed on the non-viewed display device. Users may feel the need to flip the smartphone back and forth to alternately view each display device, which can detract from the user's acceptance of the dual screen arrangement.

US 2011/291964 A1 discloses an electronic device including a processor, a first touch screen and a second touch screen. The first touch screen displays an object. An object transition module executed by the processor includes executable instructions to map a gesture applied to the object to a set of object movement parameters and then move the object from the first touch screen to the second touch screen in accordance with the object movement parameters.

US 2011/128241 A1 discloses a mobile terminal and controlling method by which a terminal can be used in further consideration of user's convenience. US 2011/128241 A1 includes displaying at least one object on a display unit of a touchscreen type provided to a front side of a housing of a bar type, if a first touch gesture is performed on the object, enabling the object to move from the main display unit via a first subdisplay unit provided to one lateral side of the housing to a second subdisplay unit of the touchscreen type provided to a backside of the housing, and if a second touch gesture is performed on the object displayed on the second subdisplay unit, enabling the object to move to the main display unit via the first subdisplay unit from the second subdisplay unit.

US 2016/124599 A1 discloses a method and electronic device, wherein the electronic device includes a processor for controlling multiple displays, configured to detect a selection of an object displayed on a first display operatively coupled to the electronic device, and display a virtual object on a second display operatively coupled to the electronic device in response to the selection, detect a dragging of the selected object on the first display, moving the virtual object on the second display in response to the detected dragging; and, if a release of the dragged selected object is detected on the first display, move or copy the object to the second display.

US 2011/209100 A1 discloses embodiments of a multi-screen pinch and expand gestures. A first input is recognized at a first screen of a multi-screen system, and the first input includes a first motion input. A second input is recognized at a second screen of the multi-screen system, and the second input includes a second motion input. A pinch gesture or an expand gesture can then be determined from the first and second motion inputs that are associated with the recognized first and second inputs.

### SUMMARY

Various embodiments disclosed herein are directed to a user device for displaying one or more user-interface objects, e.g., application icons or application windows. The user device includes a first display device with a touch-sensitive interface, at least one processor, and at least one memory storing instructions executable by the processor. The instructions executable by the processor are configured to identify a defined touch gesture applied to the touch-sensitive interface. The instructions executable by the processor are also configured to display a user-interface (UI) object, which has been displayed on the first display device, on a second display device communicatively coupled to the user device responsive to the identification of the defined touch gesture.

Potential advantages of these operations can include making it more intuitive for a user to select a UI object that is to be moved or duplicated from the first display device to being displayed on the second display device. Moreover, the operations may enable the user to position where the UI object is then being displayed on the second display device. These operations may be particularly helpful for a user operating a user device having display devices located on opposite sides, where the user can essentially view only one of the display devices at a time. These operations may enable one user who is viewing a UI object on the first display device to cause the UI object to become displayed on the second display device for viewing by another user.

Some other related embodiments are directed to a method performed by a user device including a first display device with a touch-sensitive interface. The method includes identifying a defined touch gesture applied to the touch-sensitive interface. The method further includes displaying a UI object, which has been displayed on the first display device, on a second display device communicatively coupled to the user device responsive to the identification of the defined touch gesture.

Some other related embodiments are directed to a computer program product including a non-transitory computer readable medium storing instructions that are executable by a processor of a user device to perform the method of embodiments discussed herein.

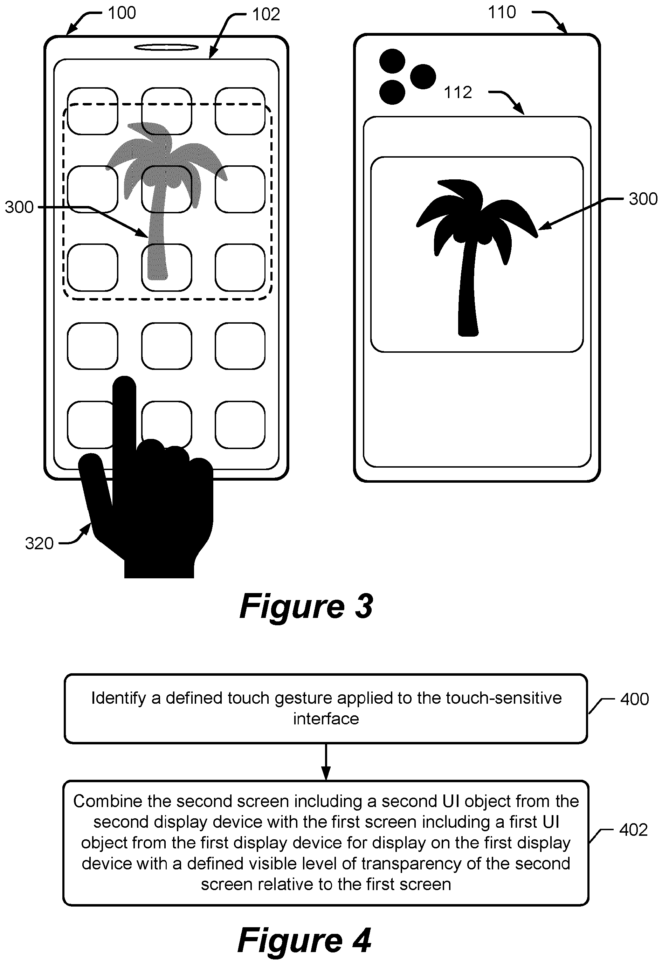

Other related systems, methods, and computer program products according to embodiments will be or become apparent to one with skill in the art upon review of the following drawings and detailed description. The present invention is defined in the independent claims, and is described in figures 3-4 and the corresponding passages of the description. Further embodiments thereof are presented in the dependent claims.

### BRIEF DESCRIPTION OF THE DRAWINGS

Aspects of the present disclosure are illustrated by way of example and are not limited by the accompanying drawings. In the drawings:
Figure 1 illustrates a user device for displaying a user-interface object in accordance with some embodiments;
Figure 2 illustrates a flowchart of operations performed by the user device of Figure 1 in accordance with some embodiments;
Figure 3 illustrates a UI object from the second display device being overlaid over a UI object from the first display device in accordance with the present invention;
Figure 4 illustrates a flowchart of operations performed by the user device of Figure 3 in accordance with the present invention;
Figure 5 illustrates an application icon on the first display device being moved or duplicated on the second display device in accordance with some embodiments;
Figure 6 illustrates a flowchart of operations performed by the user device of Figure 5 in accordance with some embodiments
Figure 7 illustrates a flowchart of other operations performed by the user device of Figure 5 in accordance with some embodiments;
Figure 8 illustrates an application icon on the first display device being positioned at a location on the second display device based on an aim-point defined in accordance with some embodiments; and
Figure 9 is a block diagram of components of a user device that are configured in accordance with some other embodiments of the present disclosure.

### DETAILED DESCRIPTION

Inventive concepts will now be described more fully hereinafter with reference to the accompanying drawings, in which examples of embodiments of inventive concepts are shown. Inventive concepts may, however, be embodied in many different forms and should not be construed as limited to the embodiments set forth herein. Rather, these embodiments are provided so that this disclosure will be thorough and complete, and will fully convey the scope of various present inventive concepts to those skilled in the art. It should also be noted that these embodiments are not mutually exclusive. Components from one embodiment may be tacitly assumed to be present/used in another embodiment.

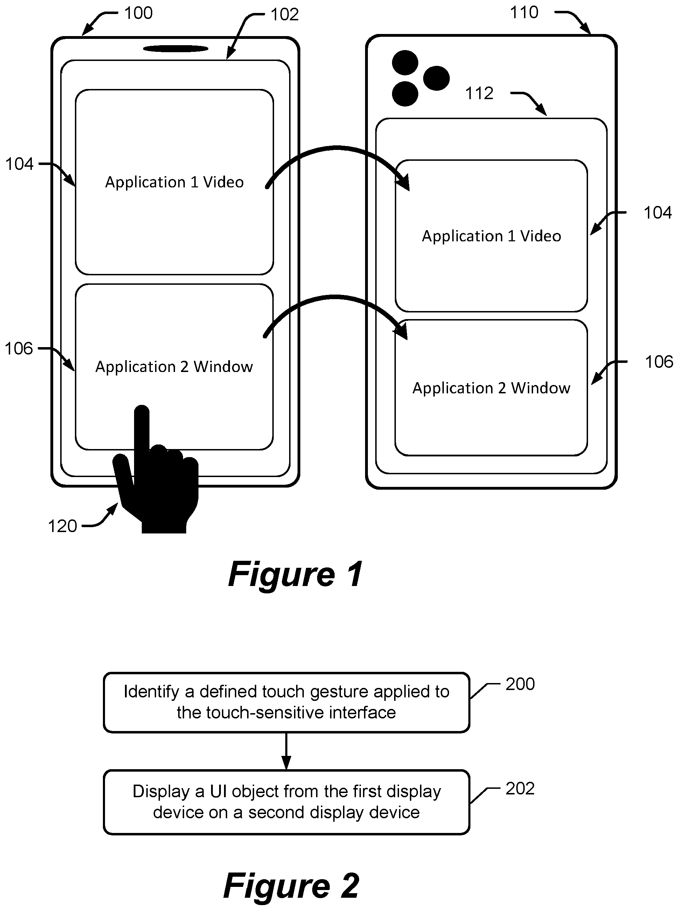

Figure 1 illustrates a user device for displaying a user-interface object in accordance with some embodiments. Figure 2 illustrates a flowchart of operations performed by the user device of Figure 1 in accordance with some embodiments. Referring to Figures 1 and 2, a user device includes a first display device 100 with a touch-sensitive interface 950, at least one processor 930, and at least one memory 910 storing instructions 920 executable by the processor 930 to perform operations and associated methods. The operations identify 200 a defined touch gesture 120 applied to the touch-sensitive interface. Responsive to the identification of the defined touch gesture 120, the operations display a user-interface (UI) object 104 and 106, which has been displayed on the first display device 100, on a second display device 110 that is communicatively coupled to the user device 900.

The UI object 104 and 106 may be icons that are user selectable to trigger execution of associated applications, windows that are displaying an image or a video from a web-browser or media player application, windows that are displaying information from user applications (e.g., game application, messaging application, email application, camera, etc.), etc.

Potential advantages of these operations can include making it more intuitive for a user to select a UI object that is to be moved or duplicated from the first display device to being displayed on the second display device. Moreover, the operations may enable the user to position where the UI object is then being displayed on the second display device. These operations may be particularly helpful for a user operating a user device having display devices located on opposite sides, where the user can essentially view only one of the display devices at a time. These operations may enable one user who is viewing a UI object (e.g., an application icon, video window, etc.) on the first display device to cause the UI object to become displayed on the second display device for viewing by another user.

A further example implementation of these operations is illustrated in Figure 1. Prior to the UI object 104 and 106 being displayed on the second display device 110, the first display device 100 displays a screen of a plurality of the UI objects 104, 106. Responsive to the identification of the defined touch gesture 120 applied to the touch-sensitive interface 950, the screen of a plurality of the UI objects 104 and 106 is moved or duplicated from the first display device 100 to the second display device 110 for display.

In some embodiments, the second display device 110 is collocated on the user device with the first display device 100. In the example of Figure 1, the first display device 100 can be integrated into a first face of the user device 900 and the second display device 110 can be integrated into a second face of the user device 900, which may be opposite to the first face.

In some other embodiments, the second display device 110 is located on a separate device, such as another smartphone, tablet computer, computer display, laptop, television, etc. In the example of Figure 1, the first display device 100 can be integrated into a first face of the user device 900 and the second display device 110 can be integrated into a face of another user device communicatively coupled to the at least one processor 930 of the user device 900.

For example, the user device displays the UI object in a transverse location on the second display device. Determining transverse locations between two opposite facing displays, or in general determining dual locations for an application icon transferred from one display to another display, may be an early step in the exemplified action of moving (herein also referred to as "pushing") an application icon (or other UI object) from a source position on a first display device to a target location displayed by a second display device of the same or other user device.

Various further embodiments will now be described in the context of moving or duplicating an application icon, although these embodiments may more generally be used with any form of UI object.

In a further example with a user device having a symmetrically folded display (e.g., of PixelSize pxtot;pytot) and wrapped over one edge/side of the user device, an application icon or other UI object residing at location (px;py) on the first display (of the first display device) can be copied or moved for display on the second display by operations that determine a display location (pxtot-px;py) on the second display (of the second display device), e.g., assuming an ideal display in terms of no-curvature folding-edge and/or display-hinge artifacts.

In the another example, the determination of where to copy or move an application icon from the first display device to be displayed on the second display device may be based on consideration of a row and column location of the application icon on the first display device mapped to a row and column location for displaying the application icon on the second display device.

In a scenario where the first and second display devices are different dimensional sizes, the determination of where an application icon or other UI object which is displayed on the first display devices is to be moved to or duplicated on the second display device can be include scaling, interpolating, and/or extrapolating (e.g., linear, logarithmic or according to some bound function) the location of the application icon on the first display device to determine the corresponding location for displaying the application icon on the second display device.

In another scenario where the first and second display devices have different display resolutions, the scaling, interpolating, and/or extrapolating operations may be similarly performed to determine where an application icon, which has been displayed on the first display device, is to be displayed on the second display device based on comparison of the display resolutions.

In some further embodiments, user device settings may be used to determine where the application icon or other UI object will be displayed on the second display device and/or a priority at which the application icon will be displayed on the second display device relative to other displayed application icons. For example, if the second display is totally empty at the targeted pixel positions (and sufficient pixel space is available surrounding, corresponding to one icon grid position, or similar), the application icon will be displayed on the second display device without any further considerations of display size differences, resolution differences, and/or effect on other application icons.

On the other hand, if the targeted position at the second display already is occupied by some icon, application, or other UI object, the system may further determine which UI object has highest precedence or priority for display, and with that information evaluate which of the UI objects should be displayed at the targeted position. A further determination can be made as to how the lower-priority UI object will be organized for display, such as within a lower hierarchical folder.

How the application icon or other UI object is to be displayed on the second display device can be based determination of prioritization of the application icon relative to other application icons being displayed on the second display device. Icon position priorities may be defined based on various defined types of application, e.g. an OS-native application such as "Settings" or "Call" or "Mail" can be defined to have a higher high priority than other types of applications, e.g. game applications and other applications downloaded by a user from an application store.

Icon position priorities determine where among a plurality of different display layers the application displayed on the second display device; e.g. one priority given for entering base desktop/display, and another other priority if targeting a virtual display layers such as "widget."

In some embodiments, the operations can swap UI objects between the first and second display devices, such as between front and back displays of the user device. For example, the current front display can be swapped to become the back display (and vice versa) responsive to identifying the defined touch gesture.

In another embodiment, prior to the UI object being displayed on the second display device 110, the first display device 100 displays a first screen 102 of a first plurality of the UI objects and the second display device 110 displays a second screen 112 of a second plurality of the UI objects. Responsive to the identification of the defined touch gesture 120 applied to the touch-sensitive interface, a display swap operation is performed wherein the first screen 102 of the first plurality of the UI objects is moved from the first display device 100 to the second display device 110 for display and the second screen 112 of the second plurality of the UI objects is moved from the second display device 110 to the first display device 100 for display.

In a further embodiment, the display swap operation is reversed responsive to no longer identifying the touch-sensitive interface is no longer being touched, which may correspond to the user non longer touching the first display device. In other words, the first screen 102 of the first plurality of the UI objects is again displayed on the first display device 100 and the second screen 112 of the second plurality of the UI objects is again displayed on the second display device 110.

One example operational use scenario for display swapping is related to a user who intends to move (e.g., one finger) or duplicate (e.g., two fingers) an application icon from the front display device to the back display device. As the user touches the front display device in a defined manner (e.g., applying threshold pressure indicating 3D gesture) will trigger the user device to swap what is displayed on the front and back display devices so the user can view the application icon arranged among UI objects formerly displayed on the back display device while viewing them now displayed on the front display device. The user may define a location for where the application icon is to be displayed based on a gesture (e.g., which may be with the same threshold pressure or another threshold pressure e.g., less pressure) while dragging the application icon to that location. When the user ceases touching the front display device in the defined manner, e.g., by releasing the dragged application icon at its desired target position, the user device can responsively swap back what is displayed on the front and back display devices.

Another example operational implementation of display swapping is related to a user who wants to temporarily display content, such as on the back display or on both displays, simultaneously, for instance, for sharing an image or video, or an application window, with another user viewing the back display. This example may include the following steps. The user may select one or more UI objects on the front facing display. The user activates 3D touch to display the selected UI object(s) on the back display or on both displays. One finger gesture may correspond to a command to display the selected UI object(s) only on the back display, and a two finger gesture may correspond to a command to display the selected UI object(s) simultaneously on both the front and back displays, or vice versa.

In some embodiments, the user may apply a threshold touch pressure to the touch sensitive interface of the back display to cause UI objects displayed thereon to be displayed as an overlay on UI objects being displayed on the front display, or vice versa. As the UI objects are copied or moved from the front display to the back display, or vice versa, the user may perceive the overlaid combination of UI objects as providing a 3D visualization experience of both displays. The user device may provide the user a notification when the user device determines that UI objects have reached the back display, such as by sound, vibration, visualization, or combinations thereof. UI objects may temporarily be displayed on back display for a certain time duration (e.g., defined by a timer value), or as long as the finger is touching the front and/or back display.

Another example for display swapping may be operations that enable the user who draws a free form curve of the front facing display to have that free form curve displayed on the back display or have the free form curve displayed magnification (e.g., zoomed-in) on the back display.

In another embodiment, responsive to the UI object being moved by the user to a target location on the second display device (110), the UI object is ceased being displayed on the first display device (100).

The embodiments discussed herein may make use of any of a plurality of different defined touches, also referred to as touch gestures 120. For example, a touch gesture could be any defined type of touch on a touch-sensitive interface, such as, a long hard tap, three-dimensional (3D) touch (e.g., varying threshold levels of pressure applied by the user to the touch sensitive interface), or any other touch gesture. For example, a first threshold level of touch pressure applied to an application icon displayed on the first display device may cause that application icon to become displayed on the second display device, and a change in applied touch pressure to a second level (e.g., lighter continuing touch) may cause the application icon to be moved on the second display device to tracking movement of where the touch pressure is being applied to the first display device.\

The user device may be configured to operationally distinguish between short-taps and longer-taps and tap-hold action performed on the touch sensitive interface. For example, the user device may identify a "hard tapping/pressing" of a finger on the touch sensitive interface, e.g., either in terms of true force sensing or in terms of emulated load sensing. The display device may detect a "small-contact-area, short duration" finger-display contact differently than an "ordinary tap" or a "large-contact-area, long duration" touch.

The display device may associate detection of a "hard long tap" gesture as triggering a defined operation for how a UI object is to be displayed, such as to triggering movement of the UI object from the first display device to the second display device and/or controlling whether the UI object is displayed a root level of a hierarchy of display layers or is displayed at a lower display level, e.g., within a folder.

With further reference to Figure 1, in one embodiment the defined touch gesture 120 corresponds to a first threshold level of press against the touch-sensitive interface. Additionally, responsive to identifying a second threshold level of press applied to the touch-sensitive interface, the operations move the UI object to track sliding movements of touch locations on the touch-sensitive interface.

Figure 3 illustrates a UI object from the second display device being overlaid over the UI object from the first display device in accordance with the present invention.

Figure 4 illustrates a flowchart of operations performed by the user device of Figure 3 in accordance with the present invention.

Referring to Figures 2, 3 and 4, in some embodiments, prior to the UI object being moved or duplicated from the first display device 100 to the second display device 110, the first display device 100 displays a first screen 102 including the UI object and the second display device 110 displays a second screen 112 including second UI object 300. Additionally, responsive to the identification 200 and 400 of the defined touch gesture 320 applied to the touch-sensitive interface, the second screen 112 including the second UI object 300 is displayed in combination 402 with the first screen 102 including the UI object on the first display device 100 with a defined visible level of transparency of the second screen 112 relative to the first screen 102.

The defined visible level of transparency of the second screen 112 relative to the first screen 102 can be controlled responsive to a determined level of press against the touch-sensitive interface while the defined touch gesture 320 is being applied to the touch-sensitive interface.

For example, a defined touch gesture, such as a hard long tap or three dimensional touch, a front display device can operate to trigger a see-through function that enables a user to "see through the device" to view what is displayed on the back display device without the user needing to physically flip the user device to view the backside.

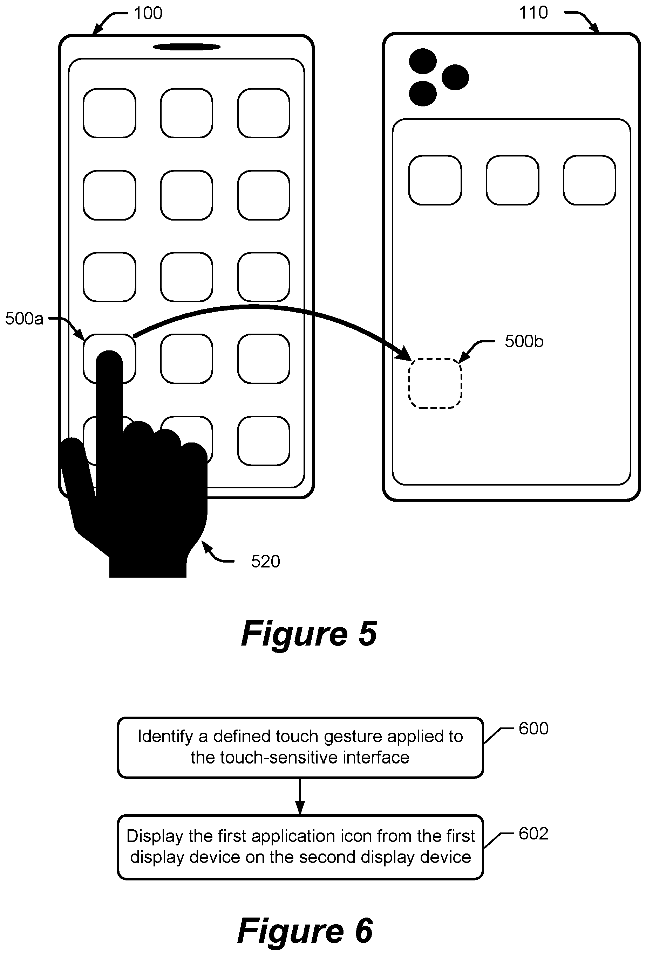

Figure 5 illustrates an application icon on the first display device being moved or duplicated on the second display device in accordance with some embodiments.

Figure 6 illustrates a flowchart of operations performed by the user device of Figure 5 in accordance with some embodiments.

As used herein, the terms "duplicate" and "duplicating" of a UI object displayed on a first display device onto a second display device can include creating an identical UI object or another representation of the UI object on the second display device. In the case of a application icon which is touch selectable to trigger execution of an associated application program, the duplicated application icon may be different but still programmatically associated with the application program to enable touch-based execution thereof. Accordingly, execution of the application program can be controlled from display devices.

Referring to Figures 2, 5 and 6, in some embodiments the at least one memory 910 stores applications each associated with an application icon 500 that is touch selectable to trigger execution of the application by the processor 930. The UI object includes a first application icon 500 programmatically linked with a first application. Additionally, prior to the UI object being displayed 202 on the second display device 110, the first display device 100 displays the first application icon 500. Additionally, responsive to identifying 200 and 600 the defined touch gesture 520 applied to the touch-sensitive interface, the operations display 202 and 602 the first application icon 500 from the first display device 100 on the second display device 110. When the operation is moving the UI object from the first display device 100 to the second display device 110, the operation to display 202 and 602 the first application icon 500 includes displaying the first application icon 500 on the second display device 110 and ceasing display of the first application icon 500 on the first display device 100. The programmatic association between the UI object and the application can then be updated to refer to the UI object now located on the second display device 110.

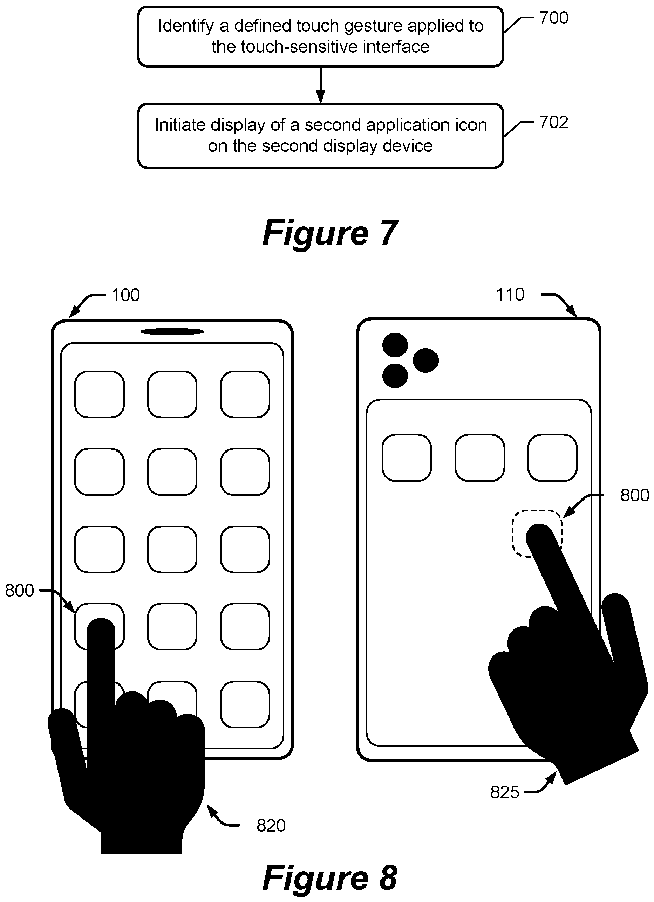

Figure 7 illustrates a flowchart of other operations performed by the user device of Figure 5 in accordance with some embodiments. These operations can correspond to duplicating an application icon from the first display device 100 onto the second display device 110.

Referring to Figures 2, 5, and 7, in some embodiments the at least one memory 910 stores applications each associated with an application icon 500a that is touch selectable to trigger execution of the application by the processor 930. The UI object includes a first application icon 500a programmatically linked to control execution of a first application.

Additionally, prior to the UI object being displayed 202 on the second display device 110, the first display device 100 displays the first application icon 500a. Responsive to identifying 200 and 700 the defined touch gesture 520 applied to the touch-sensitive interface, the operations initiate 702 display of a second application icon 500b on the second display device 110 that controls execution of the first application. A further programmatic association is then created between the second application icon 500b and the application to refer to the second application icon 500b now located on the second display device 110.

Figure 8 illustrates an application icon on the first display device being positioned at a location on the second display device based on an aim-point defined in accordance with some embodiments.

In some embodiments, an aim-point is used to guide the location of application icon displayed on a second display device. Referring to Figure 8, in some of the embodiments the stored instructions 920 executable by the processor 930 are further configured to identify an aim-point on the second display device 110 based on a touch 825 performed on the second display device 110. The first application icon 800 is positioned on the second display device 110 based on the aim-point.

For example, a user may use a finger positioned at the backside of the user device, for example touching the back display of the user device, to indicate on the backside display (e.g., second display device 110) where an icon or other UI object is to be copied or moved from the frontside of the user device ( e.g., from the first display device 100). In other words, the finger serves as an aiming-point for where the icon will appear on the backside display.

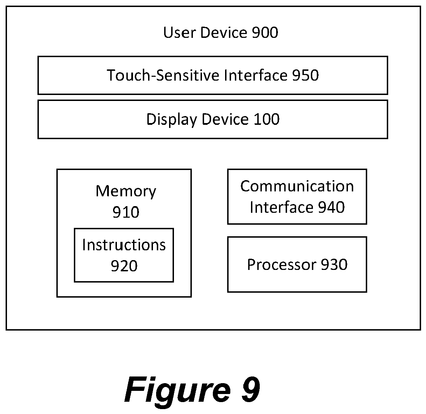

Figure 9 is a block diagram of components of a user device 900 that are configured in accordance with some other embodiments of the present disclosure. The user device 900 can include at least one processor circuit 930 (processor) and at least one memory circuit 910 (memory) which is also described below as a computer readable medium. The memory 910 stores instructions 920 that are executed by the processor 930 to perform operations disclosed herein for at least one embodiment of the user device 900. The processor 930 may include one or more data processing circuits, such as a general purpose and/or special purpose processor (e.g., microprocessor and/or digital signal processor), which may be collocated or distributed across one or more data networks. The user device 900 may further include a display device 100, a touch-sensitive interface 950, and a communication interface 940.

In some embodiments, a computer program product including a non-transitory computer readable medium storing instructions that are executable by a processor of a user device to perform the method performed by the user device as discussed in various embodiments above.

One use case can include app icon re-location from a device's first display to second (transverse) display.

Another use case can include general two-user two-sided operations where a second user may be provided a request for password/authentication to the first user which is not observable on the backside of the device and, therefore reduces or avoids possibility for password sneak-peeking. The first user may copy or move application authentication interface information to the backside using a defined touch gesture.

Another use case can include two-person content sharing, such as displaying a video clip or image on both front and back-facing display device or only on back-facing display device.

Another use case can include two-person co-creation, such as making both displays available for user interfacing to a same application.

Another use case can include two-person two-sided-device gaming, such as battleship, four in a row, tic-tac-toe, or alike.

Further definitions and embodiments are explained below.

In the above description of various embodiments of present inventive concepts, it is to be understood that the terminology used herein is for the purpose of describing particular embodiments only and is not intended to be limiting of present inventive concepts. Unless otherwise defined, all terms (including technical and scientific terms) used herein have the same meaning as commonly understood by one of ordinary skill in the art to which present inventive concepts belongs. It will be further understood that terms, such as those defined in commonly used dictionaries, should be interpreted as having a meaning that is consistent with their meaning in the context of this specification and the relevant art and will not be interpreted in an idealized or overly formal sense expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" includes any and all combinations of one or more of the associated listed items.

It will be understood that although the terms first, second, third, etc. may be used herein to describe various elements/operations, these elements/operations should not be limited by these terms. These terms are only used to distinguish one element/operation from another element/operation. Thus, a first element/operation in some embodiments could be termed a second element/operation in other embodiments without departing from the teachings of present inventive concepts. The same reference numerals or the same reference designators denote the same or similar elements throughout the specification.

As used herein, the terms "comprise", "comprising", "comprises", "include", "including", "includes", "have", "has", "having", or variants thereof are open-ended, and include one or more stated features, integers, elements, steps, circuits or functions but does not preclude the presence or addition of one or more other features, integers, elements, steps, circuits, functions or groups thereof. Furthermore, as used herein, the common abbreviation "e.g.", which derives from the Latin phrase "exempli gratia," may be used to introduce or specify a general example or examples of a previously mentioned item and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits, implemented by analog circuits, and/or implement by hybrid digital and analog circuits. Computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, embodiments of present inventive concepts may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts. Moreover, although some of the diagrams include arrows on communication paths to show a primary direction of communication, it is to be understood that communication may occur in the opposite direction to the depicted arrows.

## Claims

1. A user device (900) comprising:
a first display device (100) with a touch-sensitive interface (950);
at least one processor (930); and
at least one memory (910) storing instructions (920) executable by the processor (930) to:
display, by the first display device (100), a first screen (102) including a first user-interface, UI, object;
display, by a second display device (110) communicatively coupled to the user device (900), a second screen (112) including a second UI object (300);
identify a defined touch gesture (320) applied to the touch-sensitive interface of the first display device (100);
responsive to the identification of the defined touch gesture (320):
combine (402) the second screen (112) including the second UI object (300) from the second display device (110) with the first screen (102) including the first UI object from the first display device (100) for display on the first display device (100) with a defined visible level of transparency of the second screen (112) relative to the first screen (102);
identify another defined touch gesture (120) applied to the touch-sensitive interface of the first display device (100); and
responsive to the identification (200) of the other defined touch gesture (120):
display the first UI object (104, 106), which has been displayed on the first display device (100), on the second display device (110).

2. The user device (900) of Claim 1, wherein:
the first display device (100) is integrated into a first face of the user device (900) and the second display device (110) is integrated into a second face of the user device (900).

3. The user device (900) of Claims 1, wherein:
the first display device (100) is integrated into a first face of the user device (900) and the second display device (110) is integrated into another user device communicatively coupled to the at least one processor (930) of the user device (900).

4. The user device (900) of Claims 1 to 3, wherein:
prior to the first UI object (104, 106) being displayed on the second display device (110), the first display device (100) displays a screen of a plurality of UI objects (104, 106); and
responsive to the identification of the other defined touch gesture (120) applied to the touch-sensitive interface (950), the screen of the plurality of the UI objects (104, 106) is displayed on the second display device (110).

5. The user device (900) of Claims 1 to 4, wherein:
prior to the first UI object being displayed on the second display device (110), the first display device (100) displays a first screen (102) of a first plurality of the UI objects and the second display device (110) displays a second screen (112) of a second plurality of the UI objects; and
responsive to the identification of the other defined touch gesture (120) applied to the touch-sensitive interface, the first screen (102) of the first plurality of the UI objects is moved from the first display device (100) to the second display device (110) for display and the second screen (112) of the second plurality of the UI objects is moved from the second display device (110) to the first display device (100) for display.

6. The user device (900) of Claim 5, wherein:
the other defined touch gesture (120) corresponds to a first threshold level of press against the touch-sensitive interface;
responsive to identifying a second threshold level of press applied to the touch-sensitive interface, moving the first UI object on the second display device to track sliding movements of touch locations on the touch-sensitive interface.

7. The user device (900) of any of Claims 1 to 6, wherein:
responsive to the first UI object being moved by the user to a target location on the second display device (110), cease displaying the first UI object on the first display device (100).

8. The user device (900) of Claim 1, wherein:
the defined visible level of transparency of the second screen (112) relative to the first screen (102) is controlled responsive to a determined level of press against the touch-sensitive interface while the defined touch gesture (320) is being applied to the touch-sensitive interface.

9. The user device (900) of Claims 1 to 8, wherein:
the at least one memory (910) stores applications each associated with an application icon (500) that is touch selectable to trigger execution of the application by the processor (930), wherein the first UI object includes a first application icon (500) programmatically linked with a first application;
prior to the first UI object being displayed on the second display device (110), the first display device (100) displays the first application icon (500); and
responsive to identifying the other defined touch gesture (520) applied to the touch-sensitive interface, the first application icon (500) is displayed on the second display device (110) and ceasing display of the first application icon (500) on the first display device (100).

10. The user device (900) of Claims 1 to 8, wherein:
the at least one memory (910) stores applications each associated with an application icon (500a) that is touch selectable to trigger execution of the application by the processor (930), wherein the first UI object includes a first application icon (500a) programmatically linked to control execution of a first application;
prior to the first UI object being displayed on the second display device (110), the first display device (100) displays the first application icon (500a); and
responsive to identifying the other defined touch gesture (520) applied to the touch-sensitive interface, initiate display of a second application icon (500b) on the second display device (110) that controls execution of the first application.

11. The user device (900) of Claims 9 to 10, further comprising:
identify an aim-point on the second display device (110) based on a touch (825) performed on the second display device (110),
wherein the first application icon (800) is positioned on the second display device (110) based on the aim-point.

12. A method performed by a user device including a first display device with a touch-sensitive interface, the method comprising:
displaying, by the first display device (100), a first screen (102) including a first user-interface, UI, object;
displaying, by a second display device (110) communicatively coupled to the user device (900), a second screen (112) including a second UI object (300);
identifying (200) a defined touch gesture (320) applied to the touch-sensitive interface of the first display device (100);
responsive to the identification (200) of the defined touch gesture (320):
combining (402) the second screen (112) including the second UI object (300) from the second display device (110) with the first screen (102) including the first UI object from the first display device (100) for display on the first display device (100) with a defined visible level of transparency of the second screen (112) relative to the first screen (102);
identifying (200) another defined touch gesture applied to the touch-sensitive interface of the first display device (100); and
responsive to the identification (200) of the other defined touch gesture (120): displaying (202) the first UI object, which has been displayed on the first display device, on the second display device.

13. The method of Claim 12, wherein:
the first display device is integrated into a first face of the user device and the second display device is integrated into a second face of the user device.

14. The method of Claims 12, wherein:
the first display device is integrated into a first face of the user device and the second display device is integrated into another user device communicatively coupled to the user device.

15. The method of Claims 12 to 14, wherein:
prior to the first UI object being displayed on the second display device, the first display device displays a screen of the plurality of UI objects; and
responsive to identifying (200) the other defined touch gesture (120) applied to the touch-sensitive interface, the screen of the plurality of the UI objects is displayed on the second display device.

16. The method of Claims 12 to 15, wherein:
prior to the first UI object being displayed on the second display device, the first display device displays a first screen of a first plurality of the UI objects and the second display device displays a second screen of a second plurality of the UI objects; and
responsive to identifying (200) the other defined touch gesture (120) applied to the touch-sensitive interface, the first screen of the first plurality of the UI objects is moved from the first display device to the second display device for display and the second screen of the second plurality of the UI objects is moved from the second display device to the first display device for display.

17. The method of Claim 16, wherein:
the other defined touch gesture (120) corresponds to a first threshold level of press against the touch-sensitive interface;
responsive to identifying a second threshold level of press applied to the touch-sensitive interface, moving the first UI object on the second display device to track sliding movements of touch locations on the touch-sensitive interface.

18. The method of any of Claims 12 to 17, wherein:
responsive to the first UI object being moved by the user to a target location on the second display device, ceasing display of the first UI object on the first display device.

19. The method of Claim 12, wherein:
the defined visible level of transparency of the second screen relative to the first screen is controlled responsive to a determined level of press against the touch-sensitive interface while the defined touch gesture (320) is being applied to the touch-sensitive interface.

20. The method of Claims 12 to 20, wherein:
at least one memory of the user device stores applications each associated with an application icon that is touch selectable to trigger execution of the application by at least one processor of the user device, wherein the first UI object includes a first application icon programmatically linked with a first application;
prior to the first UI object being displayed (202) on the second display device, the first display device displays the first application icon; and
responsive to identifying the other defined touch gesture (520) applied to the touch-sensitive interface, displaying the first application icon (500) on the second display device (110) and ceasing display of the first application icon (500) on the first display device (100).

21. The method of Claims 12 to 20, wherein:
at least one memory of the user device stores applications each associated with an application icon that is touch selectable to trigger execution of the application by at least one processor of the user device, wherein the first UI object includes a first application icon programmatically linked to control execution of a first application;
prior to the first UI object being displayed (202) on the second display device, the first display device displays the first application icon; and
responsive to identifying (200, 700) the other defined touch gesture applied to the touch-sensitive interface, initiating (702) display of a second application icon on the second display device that controls execution of the first application.

22. The method of Claims 20 to 21, further comprising:
identifying an aim-point on the second display device based on a touch (825) performed on the second display device,
wherein the first application icon is positioned on the second display device based on the aim-point.

23. A computer program product comprising a non-transitory computer readable medium storing instructions that are executable by a processor of a user device to perform the method of any of Claims 12 to 22.

## Patentansprüche

1. Benutzervorrichtung (900), umfassend:
eine erste Anzeigevorrichtung (100) mit einer berührungsempfindlichen Schnittstelle (950);
mindestens einen Prozessor (930); und
mindestens einen Speicher (910), der Anweisungen (920) speichert, die durch den Prozessor (930) zu Folgendem ausführbar sind:
Anzeigen eines ersten Bildschirms (102) einschließlich eines ersten Benutzerschnittstellenobjekts, UI-Objekts, durch die erste Anzeigevorrichtung (100);
Anzeigen eines zweiten Bildschirms (112) einschließlich eines zweiten UI-Objekts (300) durch eine zweite Anzeigevorrichtung (110), die kommunikativ an die Benutzervorrichtung (900) gekoppelt ist;
Identifizieren einer definierten Berührungsgeste (320), die auf die berührungsempfindliche Schnittstelle der ersten Anzeigevorrichtung (100) angewendet wird;
als Reaktion auf die Identifizierung der definierten Berührungsgeste (320):
Kombinieren (402) des zweiten Bildschirms (112) einschließlich des zweiten UI-Objekts (300) von der zweiten Anzeigevorrichtung (110) mit dem ersten Bildschirm (102) einschließlich des ersten UI-Objekts von der ersten Anzeigevorrichtung (100) zur Anzeige auf der ersten Anzeigevorrichtung (100) mit einem definierten sichtbaren Transparenzniveau des zweiten Bildschirms (112) relativ zu dem ersten Bildschirm (102);
Identifizieren einer anderen definierten Berührungsgeste (120), die auf die berührungsempfindliche Schnittstelle der ersten Anzeigevorrichtung (100) angewendet wird; und
als Reaktion auf die Identifizierung (200) der anderen definierten Berührungsgeste (120):
Anzeigen des ersten UI-Objekts (104, 106), das auf der ersten Anzeigevorrichtung (100) angezeigt worden ist, auf der zweiten Anzeigevorrichtung (110).

2. Benutzervorrichtung (900) nach Anspruch 1, wobei:
die erste Anzeigevorrichtung (100) in eine erste Fläche der Benutzervorrichtung (900) integriert ist und die zweite Anzeigevorrichtung (110) in eine zweite Fläche der Benutzervorrichtung (900) integriert ist.

3. Benutzervorrichtung (900) nach Anspruch 1, wobei:
die erste Anzeigevorrichtung (100) in eine erste Fläche der Benutzervorrichtung (900) integriert ist und die zweite Anzeigevorrichtung (110) in eine andere Benutzervorrichtung integriert ist, die kommunikativ an den mindestens einen Prozessor (930) der Benutzervorrichtung (900) gekoppelt ist.

4. Benutzervorrichtung (900) nach Anspruch 1 bis 3, wobei:
bevor das erste UI-Objekt (104, 106) auf der zweiten Anzeigevorrichtung (110) angezeigt wird, die erste Anzeigevorrichtung (100) einen Bildschirm einer Vielzahl von UI-Objekten (104, 106) anzeigt; und
als Reaktion auf die Identifizierung der anderen definierten Berührungsgeste (120), die auf die berührungsempfindliche Schnittstelle (950) angewendet wird, der Bildschirm der Vielzahl der UI-Objekte (104, 106) auf der zweiten Anzeigevorrichtung (110) angezeigt wird.

5. Benutzervorrichtung (900) nach Anspruch 1 bis 4, wobei:
bevor das erste UI-Objekt auf der zweiten Anzeigevorrichtung (110) angezeigt wird, die erste Anzeigevorrichtung (100) einen ersten Bildschirm (102) einer ersten Vielzahl der UI-Objekte anzeigt und die zweite Anzeigevorrichtung (110) einen zweiten Bildschirm (112) einer zweiten Vielzahl der UI-Objekte anzeigt; und
als Reaktion auf die Identifizierung der anderen definierten Berührungsgeste (120), die auf die berührungsempfindliche Schnittstelle angewendet wird, der erste Bildschirm (102) der ersten Vielzahl der UI-Objekte von der ersten Anzeigevorrichtung (100) zur Anzeige auf die zweite Anzeigevorrichtung (110) bewegt wird und der zweite Bildschirm (112) der zweiten Vielzahl der UI-Objekte von der zweiten Anzeigevorrichtung (110) zur Anzeige auf die erste Anzeigevorrichtung (100) bewegt wird.

6. Benutzervorrichtung (900) nach Anspruch 5, wobei:
die andere definierte Berührungsgeste (120) einem ersten Schwellendrückniveau gegen die berührungsempfindliche Schnittstelle entspricht;
als Reaktion auf das Identifizieren eines zweiten Schwellendrückniveaus, das auf die berührungsempfindliche Schnittstelle angewendet wird, Bewegen des ersten UI-Objekts auf der zweiten Anzeigevorrichtung, um Verschiebungsbewegungen von Berührungsstellen auf der berührungsempfindlichen Schnittstelle zu verfolgen.

7. Benutzervorrichtung (900) nach einem der Ansprüche 1 bis 6, wobei:
als Reaktion darauf, dass das erste UI-Objekt durch den Benutzer an eine Zielstelle auf der zweiten Anzeigevorrichtung (110) bewegt wird, Beenden des Anzeigens des ersten UI-Objekts auf der ersten Anzeigevorrichtung (100).

8. Benutzervorrichtung (900) nach Anspruch 1, wobei:
das definierte sichtbare Transparenzniveau des zweiten Bildschirms (112) relativ zu dem ersten Bildschirm (102) als Reaktion auf ein bestimmtes Drückniveau gegen die berührungsempfindliche Schnittstelle gesteuert wird, während die definierte Berührungsgeste (320) auf die berührungsempfindliche Schnittstelle angewendet wird.

9. Benutzervorrichtung (900) nach Anspruch 1 bis 8, wobei:
der mindestens eine Speicher (910) Anwendungen speichert, die jeweils einem Anwendungssymbol (500) zugeordnet sind, das mittels Berührung auswählbar ist, um eine Ausführung der Anwendung durch den Prozessor (930) auszulösen, wobei das erste UI-Objekt ein erstes Anwendungssymbol (500) einschließt, das programmatisch mit einer ersten Anwendung verknüpft ist;
bevor das erste UI-Objekt auf der zweiten Anzeigevorrichtung (110) angezeigt wird, die erste Anzeigevorrichtung (100) das erste Anwendungssymbol (500) anzeigt; und
als Reaktion auf das Identifizieren der anderen definierten Berührungsgeste (520), die auf die berührungsempfindliche Schnittstelle angewendet wird, das erste Anwendungssymbol (500) auf der zweiten Anzeigevorrichtung (110) angezeigt wird und Beenden der Anzeige des ersten Anwendungssymbols (500) auf der ersten Anzeigevorrichtung (100).

10. Benutzervorrichtung (900) nach Anspruch 1 bis 8, wobei:
der mindestens eine Speicher (910) Anwendungen speichert, die jeweils einem Anwendungssymbol (500a) zugeordnet sind, das mittels Berührung auswählbar ist, um eine Ausführung der Anwendung durch den Prozessor (930) auszulösen, wobei das erste UI-Objekt ein erstes Anwendungssymbol (500a) einschließt, das programmatisch verknüpft ist, um eine Ausführung einer ersten Anwendung zu steuern;
bevor das erste UI-Objekt auf der zweiten Anzeigevorrichtung (110) angezeigt wird, die erste Anzeigevorrichtung (100) das erste Anwendungssymbol (500a) anzeigt; und
als Reaktion auf das Identifizieren der anderen definierten Berührungsgeste (520), die auf die berührungsempfindliche Schnittstelle angewendet wird, Einleiten einer Anzeige eines zweiten Anwendungssymbols (500b) auf der zweiten Anzeigevorrichtung (110), das die Ausführung der ersten Anwendung steuert.

11. Benutzervorrichtung (900) nach Anspruch 9 bis 10, ferner umfassend:
Identifizieren eines Zielpunkts auf der zweiten Anzeigevorrichtung (110) basierend auf einer Berührung (825), die auf der zweiten Anzeigevorrichtung (110) durchgeführt wird,
wobei das erste Anwendungssymbol (800) auf der zweiten Anzeigevorrichtung (110) basierend auf dem Zielpunkt positioniert ist.

12. Verfahren, das durch eine Benutzervorrichtung durchgeführt wird, die eine erste Anzeigevorrichtung mit einer berührungsempfindlichen Schnittstelle einschließt, wobei das Verfahren Folgendes umfasst:
Anzeigen eines ersten Bildschirms (102) einschließlich eines ersten Benutzerschnittstellenobjekts, UI-Objekts, durch die erste Anzeigevorrichtung (100);
Anzeigen eines zweiten Bildschirms (112) einschließlich eines zweiten UI-Objekts (300) durch eine zweite Anzeigevorrichtung (110), die kommunikativ an die Benutzervorrichtung (900) gekoppelt ist;
Identifizieren (200) einer definierten Berührungsgeste (320), die auf die berührungsempfindliche Schnittstelle der ersten Anzeigevorrichtung (100) angewendet wird;
als Reaktion auf die Identifizierung (200) der definierten Berührungsgeste (320):
Kombinieren (402) des zweiten Bildschirms (112) einschließlich des zweiten UI-Objekts (300) von der zweiten Anzeigevorrichtung (110) mit dem ersten Bildschirm (102) einschließlich des ersten UI-Objekts von der ersten Anzeigevorrichtung (100) zur Anzeige auf der ersten Anzeigevorrichtung (100) mit einem definierten sichtbaren Transparenzniveau des zweiten Bildschirms (112) relativ zu dem ersten Bildschirm (102);
Identifizieren (200) einer anderen definierten Berührungsgeste, die auf die berührungsempfindliche Schnittstelle der ersten Anzeigevorrichtung (100) angewendet wird; und
als Reaktion auf die Identifizierung (200) der anderen definierten Berührungsgeste (120):
Anzeigen (202) des ersten UI-Objekts, das auf der ersten Anzeigevorrichtung angezeigt worden ist, auf der zweiten Anzeigevorrichtung.

13. Verfahren nach Anspruch 12, wobei:
die erste Anzeigevorrichtung in eine erste Fläche der Benutzervorrichtung integriert ist und die zweite Anzeigevorrichtung in eine zweite Fläche der Benutzervorrichtung integriert ist.

14. Verfahren nach Anspruch 12, wobei:
die erste Anzeigevorrichtung in eine erste Fläche der Benutzervorrichtung integriert ist und die zweite Anzeigevorrichtung in eine andere Benutzervorrichtung integriert ist, die kommunikativ an die Benutzervorrichtung gekoppelt ist.

15. Verfahren nach Anspruch 12 bis 14, wobei:
bevor das erste UI-Objekt auf der zweiten Anzeigevorrichtung angezeigt wird, die erste Anzeigevorrichtung einen Bildschirm der Vielzahl von UI-Objekten anzeigt; und
als Reaktion auf das Identifizieren (200) der anderen definierten Berührungsgeste (120), die auf die berührungsempfindliche Schnittstelle angewendet wird, der Bildschirm der Vielzahl der UI-Objekte auf der zweiten Anzeigevorrichtung angezeigt wird.

16. Verfahren nach Anspruch 12 bis 15, wobei:
bevor das erste UI-Objekt auf der zweiten Anzeigevorrichtung angezeigt wird, die erste Anzeigevorrichtung einen ersten Bildschirm einer ersten Vielzahl der UI-Objekte anzeigt und die zweite Anzeigevorrichtung einen zweiten Bildschirm einer zweiten Vielzahl der UI-Objekte anzeigt; und
als Reaktion auf das Identifizieren (200) der anderen definierten Berührungsgeste (120), die auf die berührungsempfindliche Schnittstelle angewendet wird, der erste Bildschirm der ersten Vielzahl der UI-Objekte von der ersten Anzeigevorrichtung zur Anzeige auf die zweite Anzeigevorrichtung bewegt wird und der zweite Bildschirm der zweiten Vielzahl der UI-Objekte von der zweiten Anzeigevorrichtung zur Anzeige auf die erste Anzeigevorrichtung bewegt wird.

17. Verfahren nach Anspruch 16, wobei:
die andere definierte Berührungsgeste (120) einem ersten Schwellendrückniveau gegen die berührungsempfindliche Schnittstelle entspricht;
als Reaktion auf das Identifizieren eines zweiten Schwellendrückniveaus, das auf die berührungsempfindliche Schnittstelle angewendet wird, Bewegen des ersten UI-Objekts auf der zweiten Anzeigevorrichtung, um Verschiebungsbewegungen von Berührungsstellen auf der berührungsempfindlichen Schnittstelle zu verfolgen.

18. Verfahren nach einem der Ansprüche 12 bis 17, wobei:
als Reaktion darauf, dass das erste UI-Objekt durch den Benutzer an eine Zielstelle auf der zweiten Anzeigevorrichtung bewegt wird, Beenden der Anzeige des ersten UI-Objekts auf der ersten Anzeigevorrichtung.

19. Verfahren nach Anspruch 12, wobei:
das definierte sichtbare Transparenzniveau des zweiten Bildschirms relativ zu dem ersten Bildschirm als Reaktion auf ein bestimmtes Drückniveau gegen die berührungsempfindliche Schnittstelle gesteuert wird, während die definierte Berührungsgeste (320) auf die berührungsempfindliche Schnittstelle angewendet wird.

20. Verfahren nach Anspruch 12 bis 20, wobei:
mindestens ein Speicher der Benutzervorrichtung Anwendungen speichert, die jeweils einem Anwendungssymbol zugeordnet sind, das mittels Berührung auswählbar ist, um eine Ausführung der Anwendung durch mindestens einen Prozessor der Benutzervorrichtung auszulösen, wobei das erste UI-Objekt ein erstes Anwendungssymbol einschließt, das programmatisch mit einer ersten Anwendung verknüpft ist;
bevor das erste UI-Objekt auf der zweiten Anzeigevorrichtung angezeigt (202) wird, die erste Anzeigevorrichtung das erste Anwendungssymbol anzeigt; und
als Reaktion auf das Identifizieren der anderen definierten Berührungsgeste (520), die auf die berührungsempfindliche Schnittstelle angewendet wird, Anzeigen des ersten Anwendungssymbols (500) auf der zweiten Anzeigevorrichtung (110) und Beenden der Anzeige des ersten Anwendungssymbols (500) auf der ersten Anzeigevorrichtung (100).

21. Verfahren nach Anspruch 12 bis 20, wobei:
mindestens ein Speicher der Benutzervorrichtung Anwendungen speichert, die jeweils einem Anwendungssymbol zugeordnet sind, das mittels Berührung auswählbar ist, um eine Ausführung der Anwendung durch mindestens einen Prozessor der Benutzervorrichtung auszulösen, wobei das erste UI-Objekt ein erstes Anwendungssymbol einschließt, das programmatisch verknüpft ist, um eine Ausführung einer ersten Anwendung zu steuern;
bevor das erste UI-Objekt auf der zweiten Anzeigevorrichtung angezeigt (202) wird, die erste Anzeigevorrichtung das erste Anwendungssymbol anzeigt; und
als Reaktion auf das Identifizieren (200, 700) der anderen definierten Berührungsgeste, die auf die berührungsempfindliche Schnittstelle angewendet wird, Einleiten (702) einer Anzeige eines zweiten Anwendungssymbols auf der zweiten Anzeigevorrichtung, das die Ausführung der ersten Anwendung steuert.

22. Verfahren nach Anspruch 20 bis 21, ferner umfassend:
Identifizieren eines Zielpunkts auf der zweiten Anzeigevorrichtung basierend auf einer Berührung (825), die auf der zweiten Anzeigevorrichtung durchgeführt wird,
wobei das erste Anwendungssymbol auf der zweiten Anzeigevorrichtung basierend auf dem Zielpunkt positioniert ist.

23. Computerprogrammprodukt, das ein nichttransitorisches computerlesbares Medium umfasst, das Anweisungen speichert, die durch einen Prozessor einer Benutzervorrichtung ausführbar sind, um das Verfahren nach einem der Ansprüche 12 bis 22 durchzuführen.

## Revendications

1. Dispositif utilisateur (900) comprenant :
un premier dispositif d'affichage (100) doté d'une interface tactile (950) ;
au moins un processeur (930) ; et
au moins une mémoire (910) stockant des instructions (920) exécutables par le processeur (930) pour :
afficher, au moyen du premier dispositif d'affichage (100), un premier écran (102) comportant un premier objet d'interface utilisateur, UI ;
afficher, au moyen d'un second dispositif d'affichage (110) couplé en communication au dispositif utilisateur (900), un second écran (112) comportant un second objet UI (300) ;
identifier un geste tactile défini (320) appliqué à l'interface tactile du premier dispositif d'affichage (100) ;
en réponse à l'identification du geste tactile défini (320) :
combiner (402) le second écran (112) comportant le second objet UI (300) à partir du second dispositif d'affichage (110) avec le premier écran (102) comportant le premier objet UI à partir du premier dispositif d'affichage (100) pour affichage sur le premier dispositif d'affichage (100) avec un niveau visible défini de transparence du second écran (112) par rapport au premier écran (102) ;
identifier un autre geste tactile défini (120) appliqué à l'interface tactile du premier dispositif d'affichage (100) ; et
en réponse à l'identification (200) de l'autre geste tactile défini (120) : afficher le premier objet UI (104, 106), qui a été affiché sur le premier dispositif d'affichage (100), sur le second dispositif d'affichage (110).

2. Dispositif utilisateur (900) selon la revendication 1, dans lequel :
le premier dispositif d'affichage (100) est intégré dans une première face du dispositif utilisateur (900) et le second dispositif d'affichage (110) est intégré dans une seconde face du dispositif utilisateur (900).

3. Dispositif utilisateur (900) selon la revendication 1, dans lequel :
le premier dispositif d'affichage (100) est intégré dans une première face du dispositif utilisateur (900) et le second dispositif d'affichage (110) est intégré dans un autre dispositif utilisateur couplé en communication à l'au moins un processeur (930) du dispositif utilisateur (900).

4. Dispositif utilisateur (900) selon les revendications 1 à 3, dans lequel :
avant que le premier objet UI (104, 106) soit affiché sur le second dispositif d'affichage (110), le premier dispositif d'affichage (100) affiche un écran d'une pluralité d'objets UI (104, 106) ; et
en réponse à l'identification de l'autre geste tactile défini (120) appliqué à l'interface tactile (950), l'écran de la pluralité d'objets UI (104, 106) est affiché sur le second dispositif d'affichage (110).

5. Dispositif utilisateur (900) selon les revendications 1 à 4, dans lequel :
avant que le premier objet UI ne soit affiché sur le second dispositif d'affichage (110), le premier dispositif d'affichage (100) affiche un premier écran (102) d'une première pluralité d'objets UI et le second dispositif d'affichage (110) affiche un second un écran (112) d'une seconde pluralité d'objets UI ; et
en réponse à l'identification de l'autre geste tactile défini (120) appliqué à l'interface tactile, le premier écran (102) de la première pluralité d'objets UI est déplacé du premier dispositif d'affichage (100) vers le second dispositif d'affichage (110) pour affichage et le second écran (112) de la seconde pluralité d'objets UI est déplacé du second dispositif d'affichage (110) vers le premier dispositif d'affichage (100) pour affichage.

6. Dispositif utilisateur (900) selon la revendication 5, dans lequel :
l'autre geste tactile défini (120) correspond à un premier niveau seuil de pression contre l'interface tactile ;
en réponse à l'identification d'un second niveau seuil de pression appliqué à l'interface tactile, le déplacement du premier objet UI sur le second dispositif d'affichage pour suivre les mouvements de coulissement d'emplacements tactiles sur l'interface tactile.

7. Dispositif utilisateur (900) selon l'une quelconque des revendications 1 à 6, dans lequel :
en réponse au déplacement du premier objet UI par l'utilisateur vers un emplacement cible sur le second dispositif d'affichage (110), arrête d'afficher le premier objet UI sur le premier dispositif d'affichage (100).

8. Dispositif utilisateur (900) selon la revendication 1, dans lequel :
le niveau visible défini de transparence du second écran (112) par rapport au premier écran (102) est commandé en réponse à un niveau déterminé de pression contre l'interface tactile pendant que le geste tactile défini (320) est appliqué à l'interface tactile.

9. Dispositif utilisateur (900) selon les revendications 1 à 8, dans lequel :
l'au moins une mémoire (910) stocke des applications, chacune associée à une icône d'application (500) qui est sélectionnable au toucher pour déclencher l'exécution de l'application par le processeur (930), dans lequel le premier objet UI comporte une première icône d'application (500) liée par programmation à une première application ;
avant que le premier objet UI ne soit affiché sur le second dispositif d'affichage (110), le premier dispositif d'affichage (100) affiche la première icône d'application (500) ; et
en réponse à l'identification de l'autre geste tactile défini (520) appliqué à l'interface tactile, la première icône d'application (500) est affichée sur le second dispositif d'affichage (110) et l'arrêt de l'affichage de la première icône d'application (500) sur le premier dispositif d'affichage (100).

10. Dispositif utilisateur (900) selon les revendications 1 à 8, dans lequel :
l'au moins une mémoire (910) stocke des applications, chacune associée à une icône d'application (500a) qui est sélectionnable au toucher pour déclencher l'exécution de l'application par le processeur (930), dans lequel le premier objet UI comporte une première icône d'application (500a) liée par programmation pour commander de l'exécution d'une première application ;
avant que le premier objet UI ne soit affiché sur le second dispositif d'affichage (110), le premier dispositif d'affichage (100) affiche la première icône d'application (500a) ; et
en réponse à l'identification de l'autre geste tactile défini (520) appliqué à l'interface tactile, lance l'affichage d'une seconde icône d'application (500b) sur le second dispositif d'affichage (110) qui commande l'exécution de la première application.

11. Dispositif utilisateur (900) selon les revendications 9 à 10, comprenant en outre :
l'identification d'un point de visée sur le second dispositif d'affichage (110) sur la base d'un contact (825) exécuté sur le second dispositif d'affichage (110),
dans lequel la première icône d'application (800) est positionnée sur le second dispositif d'affichage (110) sur la base du point de visée.

12. Procédé exécuté par un dispositif utilisateur comportant un premier dispositif d'affichage doté d'une interface tactile, le procédé comprenant :
l'affichage, au moyen du premier dispositif d'affichage (100), d'un premier écran (102) comportant un premier objet d'interface utilisateur, UI ;
l'affichage, au moyen d'un second dispositif d'affichage (110) couplé en communication au dispositif utilisateur (900), d'un second écran (112) comportant un second objet UI (300) ;
l'identification (200) d'un geste tactile défini (320) appliqué à l'interface tactile du premier dispositif d'affichage (100) ;
en réponse à l'identification (200) du geste tactile défini (320) : la combinaison (402) du second écran (112) comportant le second objet UI (300) à partir du second dispositif d'affichage (110) avec le premier écran (102) comportant le premier objet UI à partir du premier dispositif d'affichage (100) pour affichage sur le premier dispositif d'affichage (100) avec un niveau visible défini de transparence du second écran (112) par rapport au premier écran (102) ;
l'identification (200) d'un autre geste tactile défini appliqué à l'interface tactile du premier dispositif d'affichage (100) ; et
en réponse à l'identification (200) de l'autre geste tactile défini (120) : l'affichage (202) du premier objet UI, qui a été affiché sur le premier dispositif d'affichage, sur le second dispositif d'affichage.

13. Procédé selon la revendication 12, dans lequel :
le premier dispositif d'affichage est intégré dans une première face du dispositif utilisateur et le second dispositif d'affichage est intégré dans une seconde face du dispositif utilisateur.

14. Procédé selon la revendication 12, dans lequel :
le premier dispositif d'affichage est intégré dans une première face du dispositif utilisateur et le second dispositif d'affichage est intégré dans un autre dispositif utilisateur couplé en communication au dispositif utilisateur.

15. Procédé selon les revendications 12 à 14, dans lequel :
avant que le premier objet d'interface utilisateur ne soit affiché sur le second dispositif d'affichage, le premier dispositif d'affichage affiche un écran de la pluralité d'objets UI ; et en réponse à l'identification (200) de l'autre geste tactile défini (120) appliqué à l'interface tactile, l'écran de la pluralité d'objets UI est affiché sur le second dispositif d'affichage.

16. Procédé selon les revendications 12 à 15, dans lequel :
avant que le premier objet UI ne soit affiché sur le second dispositif d'affichage, le premier dispositif d'affichage affiche un premier écran d'une première pluralité d'objets UI et le second dispositif d'affichage affiche un second écran d'une seconde pluralité d'objets UI ; et
en réponse à l'identification (200) de l'autre geste tactile défini (120) appliqué à l'interface tactile, le premier écran de la première pluralité d'objets UI est déplacé du premier dispositif d'affichage vers le second dispositif d'affichage pour affichage et le second écran de la seconde pluralité d'objets UI est déplacé du second dispositif d'affichage vers le premier dispositif d'affichage pour affichage.

17. Procédé selon la revendication 16, dans lequel :
l'autre geste tactile défini (120) correspond à un premier niveau seuil de pression contre l'interface tactile ;
en réponse à l'identification d'un second niveau seuil de pression appliqué à l'interface tactile, le déplacement du premier objet UI sur le second dispositif d'affichage pour suivre les mouvements de coulissement d'emplacements tactiles sur l'interface tactile.

18. Procédé selon l'une quelconque des revendications 12 à 17, dans lequel :
en réponse au déplacement du premier objet UI par l'utilisateur vers un emplacement cible sur le second dispositif d'affichage, l'arrêt de l'affichage du premier objet UI sur le premier dispositif d'affichage.

19. Procédé selon la revendication 12, dans lequel :
le niveau visible défini de transparence du second écran par rapport au premier écran est commandé en réponse à un niveau déterminé de pression contre l'interface tactile pendant que le geste tactile défini (320) est appliqué à l'interface tactile.

20. Procédé selon les revendications 12 à 20, dans lequel :
au moins une mémoire du dispositif utilisateur stocke des applications, chacune associée à une icône d'application qui est sélectionnable au toucher pour déclencher l'exécution de l'application par au moins un processeur du dispositif utilisateur, dans lequel le premier objet UI comporte une première icône d'application liée par programmation à une première candidature ;
avant que le premier objet UI ne soit affiché (202) sur le second dispositif d'affichage, le premier dispositif d'affichage affiche la première icône d'application ; et
en réponse à l'identification de l'autre geste tactile défini (520) appliqué à l'interface tactile, l'affichage de la première icône d'application (500) sur le second dispositif d'affichage (110) et l'arrêt de l'affichage de la première icône d'application (500) sur le premier dispositif d'affichage (100).

21. Procédé selon les revendications 12 à 20, dans lequel :
au moins une mémoire du dispositif utilisateur stocke des applications, chacune associée à une icône d'application qui est sélectionnable au toucher pour déclencher l'exécution de l'application par au moins un processeur du dispositif utilisateur, dans lequel le premier objet UI comporte une première icône d'application liée par programmation pour commander l'exécution d'une première application ;
avant que le premier objet UI ne soit affiché (202) sur le second dispositif d'affichage, le premier dispositif d'affichage affiche la première icône d'application ; et
en réponse à l'identification (200, 700) de l'autre geste tactile défini appliqué à l'interface tactile, le lancement (702) de l'affichage d'une seconde icône d'application sur le second dispositif d'affichage qui commande l'exécution de la première application.

22. Procédé selon les revendications 20 à 21, comprenant en outre :
l'identification d'un point de visée sur le second dispositif d'affichage sur la base d'un toucher (825) exécuté sur le second dispositif d'affichage,
dans lequel la première icône d'application est positionnée sur le second dispositif d'affichage sur la base du point de visée.

23. Produit de programme informatique comprenant un support non transitoire lisible par ordinateur stockant des instructions qui sont exécutables par un processeur d'un dispositif utilisateur pour exécuter le procédé selon l'une quelconque des revendications 12 à 22.
